Europäisches Patentamt

European Patent Office

Office européen des brevets

(19)

(11) Veröffentlichungsnummer: **0 180 068**
A2

(12) **EUROPÄISCHE PATENTANMELDUNG**

(21) Anmeldenummer: 85112708.4

(22) Anmeldetag: 08.10.85

(51) Int. Cl.⁴: **G 01 N 29/00**

(30) Priorität: 26.10.84 DE 3439216

(43) Veröffentlichungstag der Anmeldung: 07.05.86
**Patentblatt 86/19**

(84) Benannte Vertragsstaaten: **AT BE CH DE FR GB IT LI NL SE**

(71) Anmelder: **DORNIER SYSTEM GmbH, Postfach 1360, D-7990 Friedrichshafen (DE)**

(72) Erfinder: **Scherber, Werner, Dipl.-Phys., Unterer Höhenweg 22, D-7775 Bermatingen (DE)**
Erfinder: **Boos, Rudi, Obere Auen 4, D-7778 Markdorf (DE)**

(74) Vertreter: **Landsmann, Ralf, Dipl.-Ing., Kleeweg 3, D-7990 Friedrichshafen 1 (DE)**

(54) **Bestimmung des Füllgases von Isolierglaseinheiten.**

(57) Verfahren zur Untersuchung des Füllgases von Isolier-glaseinheiten, wobei die beiden begrenzenden Glasschei-ben (1) in niederfrequente mechanische Schwingungen ver-setzt werden und charakteristische Schwingungseigen-schaften wie Resonanzfrequenz oder Richtgrösse bestimmt werden.

EP 0 180 068 A2

DORNIER SYSTEM GMBH       — 1 —

7990 Friedrichshafen

Reg. S 496

Bestimmung des Füllgases von Isolierglaseinheiten

Die Erfindung betrifft Verfahren und Vorrichtungen zur
Untersuchung des Füllgases von Isolierglaseinheiten.

Es ist heute üblich, Mehrscheibenisolierglaseinheiten mit
Gas zu füllen. Durch geeignete Gasfüllungen können Wärme-
und Schalldämmung verbessert werden. Die Abfülltechnik ist
wirtschaftlich durchführbar und wird in grossem Umfang
angewendet.

Es hat sich jedoch gezeigt, dass die Gasfüllung von Isolierglaseinheiten viel problematischer ist als sie früher vorhersehbar war. So gibt es bislang kein einfaches, kostengünstiges Prüfverfahren, um den Gasinhalt einer verschlossenen Isolierglaseinheit nachzuweisen. Die Scheiben werden
in der Regel gefertigt und eingebaut, ohne dass kontrolliert
wurde, ob überhaupt Gas eingefüllt worden ist und ob das
eingefüllte Gas auch während der Lebensdauer der Scheiben
im Scheibenzwischenraum erhalten blieb.

Zwar gibt es grundsätzlich die Möglichkeit, eine Probe des Füllgases durch den Randverbund der Scheibe zu entnehmen und mittels Analyseverfahren wie Chromatographie, Massenspektrometrie oder der Photometrie die chemische Zusammensetzung des Gases zu untersuchen. Die Verfahren sind jedoch für Fertigungskontrollen oder Routineuntersuchungen zu teuer. Ein anderer, zumindest qualitativer Hinweis auf den Gasinhalt besteht darin, den k-Wert der Isolierglaseinheit zu bestimmen, was aber ebenfalls aus Kostengründen in den meisten Fällen ausgeschlossen ist. Wenn der Gasaustausch sehr weit fortgeschritten ist oder die Undichtigkeit sehr gross ist, lässt sich eine fehlerhafte Isolierglaseinheit aufgrund der Kondensation eingedrungener Luftfeuchtigkeit mit dem Auge erkennen. Normalerweise geht die Ausdiffusion jedoch sehr langsam vor sich, und es kann Jahre dauern, bis der Ausfall bemerkt wird. Sind grosse Fensterflächen betroffen, dann wird in dieser Zeit aufgrund ungenügender Isolierfähigkeit ein erheblicher Anteil der Heizenergie des Gebäudes verlorengehen bzw. es liegt eine erhöhte Lärmbelästigung vor.

Da also nach dem Stand der Technik eine Überwachung von Isoliergläsern in grösseren Stückzahlen noch nicht möglich ist, muss man sich auf Typenprüfungen und auf Laboruntersuchungen von Einzelelementen verlassen. Diese wichtigen Untersuchungen bestätigen, dass eine bestimmte Fertigungsqualität und Lebensdauer grundsätzlich erreichbar ist. Sie liefern jedoch keinerlei statistisches Material über den Zustand der Gesamtheit der gefertigten Isolierglaseinheiten, das heisst, es ist nicht bekannt, mit welcher Zuverlässigkeit die Gasfüllungen eingebracht sind und welcher Anteil der verwendeten Scheiben Undichtigkeiten aufgrund von Fabrikationsfehlern, nachträglichen Beschädigungen oder Alterung aufweist.

Die erwähnten technischen Schwierigkeiten haben zu einer gewissen Zurückhaltung gegenüber dem gasgefüllten Isolierglas geführt. Die Isolierglashersteller und Fensterbauer sind daher nicht in der Lage, zuverlässige individuelle Qualitätskontrollen durchzuführen und ausreichende Garantieerklärungen abzugeben. Vielerorts reagiert man auf diese Situation so, dass die durch die Gasfüllung gegenüber Luftfüllung bewirkte Erhöhung der Wärmedämmung bei der Wärmebedarfsberechnung von Gebäuden nicht berücksichtigt wird.

Die Isolierglaseinheit - ein an sich wertvolles und fortschrittliches Produkt - wird auf diese Weise an einer breiten und effektiven Verwendung gehindert.

Zur Messung der Konzentration des Gases in einer Isolierglaseinheit ist bekannt (DE-OS 31 05 740), einen einfachen Sensor in den Randverbund der Scheiben schon bei der Fertigung einzubauen. Die Einführung dieses Verfahrens hat sich - obwohl technisch und kostenmäßig interessant - bislang als schwierig erwiesen; hauptsächlich deshalb, weil konsequenterweise alle Isolierglasscheiben eines Herstellers oder eines Gebindes mit Sensoren ausgerüstet sein müssen, selbst wenn auf Dauer nur ein kleiner Bruchteil davon für Stichprobenmessungen herangezogen werden soll.

Aus der DD-PS 1300 79 ist eine Einrichtung zum Prüfen von Mehrscheibenglas bekannt, bei der der Feuchtigkeitsgehalt der Gasfüllung des Zwischenraumes dadurch gemessen wird, daß ein Bereich einer Scheibe unter den Taupunkt abgekühlt wird, wodurch eventuell vorhandene Feuchtigkeit dort in Tröpfchen kondensiert, und die davon beeinflußte Lichtstreuung in diesem Bereich registriert wird. Diese Patentschrift verwendet ein optisches Verfahren und registriert nur die Feuchtigkeit der Gasfüllung. Andere Gase werden nicht detektiert. Anregungen, die Gasfüllung nach anderen Gasen zu untersuchen oder andere als optische Verfahren anzuwenden, sind der Patentschrift nicht zu entnehmen.

Der Erfindung liegt die Aufgabe zugrunde, ein Meßverfahren zu schaffen, mit dem die effektive Konzentration des Füllgases einer Isolierglaseinheit auf einfache, schnelle und wirtschaftliche Weise zu ermitteln ist, wobei auf eine Gasentnahme oder auf einen Sensor im Innenraum verzichtet werden soll.

- 4a -

Diese Aufgabe wird erfindungsgemäß von einem Verfahren mit den in Anspruch 1 angegebenen Merkmalen gelöst.

Ausführungen der Erfindung und Vorrichtungen zur Durchführung des Verfahrens sind Gegenstände von Unteransprüchen.

Der zugrundeliegende physikalische Effekt besteht darin, daß bei gegenseitigem Schwingen zweier Scheiben die charakteristischen Eigenschaften der Schwingung, wie Resonanzfrequenz oder Leistungsaufnahme, wesentlich durch die adiabatische Kompressibilität des Gaszwischenraums bestimmt werden, während dies bei gleichphasig schwingenden Scheiben, wo der Innenraum stets nahezu konstantes Volumen beibehält, nicht der Fall ist. Die adiabatische Kompressibilität hängt linear von dem Wert $\gamma = c_p/c_v$ ab, also vom Verhältnis der Wärmekapazität des Gases bei konstantem Druck $c_p$ und bei konstantem Volumen $c_v$.

$\gamma$ ist eine Materialkonstante, die durch den Molekülaufbau des Gases bestimmt wird: Bei den einatomigen Edelgasen beträgt $\gamma$ ungefähr 1,67, bei den zweiatomigen Gasen (Sauerstoff, Stickstoff) beträgt $\gamma$ ungefähr 1,4 und bei mehratomigen Gasen ist $\gamma \leqslant 1,33$.

Da als Füllgase entweder Edelgase wie Helium, Argon, Krypton oder Schwergase wie Freon und Schwefelhexafluorid verwendet werden, ergibt sich immer ein deutlicher Unterschied zu den zweiatomigen Luftmolekülen. Die weiter unten beschriebenen praktischen Meßergebnisse zeigen, dass das Verfahren aufgrund von Nebeneffekten sogar noch empfindlicher auf die Gasart reagiert als nach dieser vereinfachten Modellvorstellung zu erwarten wäre.

Vorteilhaft gegenüber bekannten Verfahren ist, dass auf Gasentnahmen oder auf spezielle Sensoren in der Isolierglaseinheit verzichtet werden kann. Das Verfahren ist bei allen Isolierglaseinheiten (auch bei Drei- und Mehrglaseinheiten)
anwendbar.

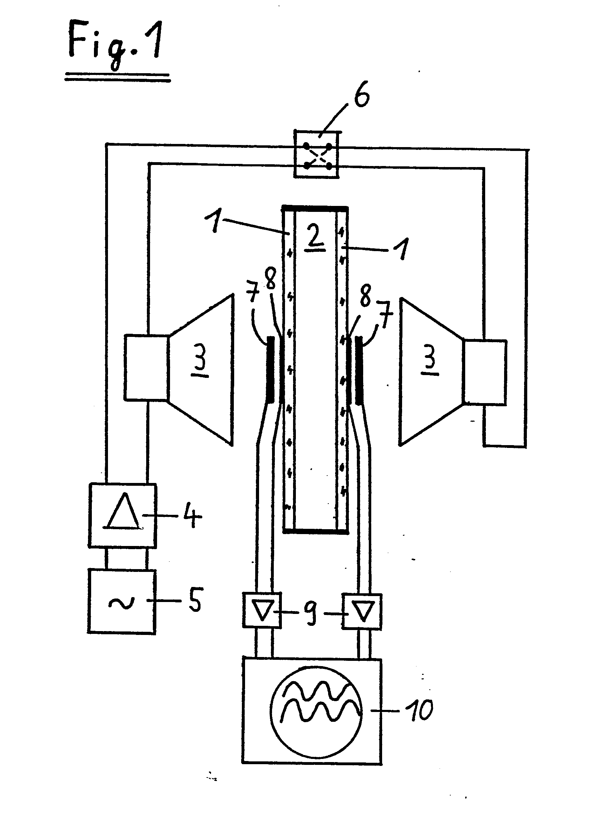

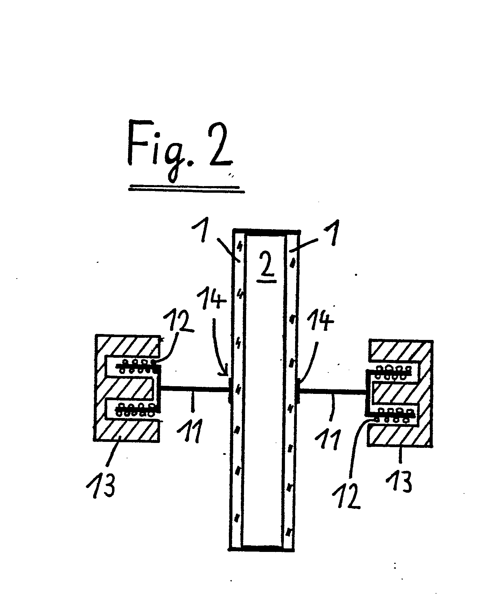

Zwei Ausführungsbeispiele der Erfindung werden anhand der
Figuren 1 und 2 näher beschrieben.

Figuren 1 und 2 zeigen je eine Vorrichtung zur Durchführung
eines erfindungsgemässen Verfahrens.

Fig. 1 zeigt eine Ausführungsform der Erfindung, wobei
die Isolierglaseinheit akustisch angeregt wird und die
Resonanzfrequenzen der sich ausbildenden Schwingungen des
Systems registriert werden. Gezeigt ist ein Zweischeibenisolierglas mit zwei gleichen Scheiben 1 und einem eingeschlossen Scheibenzwischenraum 2. Dazu ist symmetrisch je
ein grosser Lautsprecher (Basslautsprecher) 3 angeordnet.
Die Lautsprecher 3 sind von identischer Bauart und werden
in Serie von einem Verstärker 4 und einem Frequenzgenerator 5 mit sinusförmiger Schwingung angeregt. Das Umschalten
von gleichphasiger auf gegenphasige Anregung erfolgt durch
Umpolen eines der beiden Lautsprecher mit dem Schalter 6.
Zum Sichtbarmachen der Scheibenschwingungen wird im gezeigten Beispiel ein einfacher kapazitiver Wegaufnehmer
verwendet. Er besteht hier aus zwei Kondensatorplatten,
die sich im Abstand von etwa 1 mm gegenüberliegen. Die eine
Platte 8 ist beweglich und wird hier von einer auf die Scheibe 1 geklebten Aluminiumfolie gebildet. Die zweite Platte 7 ist feststehend. Da die Empfindlichkeit des kapazitiven Aufnehmers vom Abstand der Platten 7, 8 abhängt, empfiehlt es sich, eine fein verstellbare mechanische Justierung vorzusehen. Beide Aufnehmer sind an je einen Vorverstärker 9 angeschlossen, welcher die Platten 7, 8 mit einer Vorspannung von etwa 20 V versorgt und über einen hochohmigen Eingang die Ladungsverschiebung bei Abstandsänderung der Platten 7, 8 als Spannungssignal aufnimmt und verstärkt. Auf einem gewöhnlichen Zweistrahloszillographen 10 können die Ausgangssignale der Verstärker 9 bezüglich Amplitude und Phasenlage gut beobachtet werden.

Die Messung verläuft folgendermaßen: Wenn zunächst noch nichts über das Schwingungsverhalten der Isolierglaseinheit bekannt ist, kann zur Orientierung die Isolierglaseinheit durch Anklopfen mit dem Finger angeregt werden. Das System wird dadurch in freie gedämpfte Schwingung versetzt, die am Oszillograph 10 verfolgt werden kann. Es bildet sich auf diese Weise die gegenphasige Grundschwingung aus. Die Frequenz $f_O$ der Schwingung wird abgelesen. Anschliessend wird mit den Lautsprechern 3 gegenphasig erregt und in der Umgebung der Frequenz $f_O$ die Resonanzfrequenz $f_R$, also die Frequenz, bei der die Scheiben mit maximaler Amplitude schwingen, exakt ausgemessen. Wenn die Wegaufnehmer noch nicht justiert sind, kann dies dadurch geschehen, dass nacheinander jeweils nur ein Lautsprecher 3 angeschaltet wird und die Abstände so eingestellt werden, dass gleiche Empfindlichkeit, also gleichstarke Signale, an beiden Empfängerzweigen vorliegen.

Als weiteres Merkmal für das Vorliegen der gegenphasigen Resonanzschwingung kann die Phasenbeziehung der Komponenten geprüft werden: Die Phasendifferenz zwischen den beiden Scheiben 1 beträgt $180^O$, zwischen den beiden Lautsprechern 3 ebenfalls $180^O$. Jeder Lautsprecher 3 hat zu der ihm benachbarten Scheibe 1 einen Phasenvorlauf von $90^O$.

Aus der gemessenen Resonanzfrequenz $f_R$ kann direkt auf die Art der Gasfüllung geschlossen werden, wozu sich zwei Methoden anbieten:

1. Die Resonanzfrequenz $f_R$ der Isolierglaseinheit wird mit der Resonanzfrequenz von zwei Referenzglaseinheiten gleicher Bauweise verglichen, von denen eine mit Luft, die andere mit dem Originalfüllgas gefüllt ist. Da sich die Resonanzfrequenz linear mit dem Mischungsverhältnis der Gase verschiebt, kann der Volumenanteil $A_L$ der Luft der Probeisolierglaseinheit nach der Formel

$$A_L = \frac{f_R - f_{RG}}{f_{RL} - f_{RG}} \tag{1}$$

bestimmt werden. Dabei bedeuten $f_{RG}$ und $f_{RL}$ die Resonanzfrequenz der gasgefüllten bzw. der luftgefüllten Referenzglaseinheit.

2. Für Routineuntersuchungen an unterschiedlichen Isolierglastypen und für die industrielle Anwendung des erfindungsgemässen Verfahrens ist es vorteilhaft, die Resonanzfrequenzen für alle Bauweisen und Füllgase einmal auszumessen und zu katalogisieren. Dann kann der Luftanteil einer Probeisolierglaseinheit durch einfache Messung der Resonanzfrequenz und Vergleich mit den entsprechenden Referenzwerten sofort festgestellt werden. Durch Speicherung der Daten in einem Rechner kann die Auswertung sehr rationell durchgeführt werden.

Die in Fig. 1 dargestellte Anordnung entspricht im wesentlichen einem labormässigen Aufbau. Für die breite technische Anwendung des Verfahrens bieten sich neben dem erwähnten Rechnereinsatz eine Reihe von Verbesserungen an: Statt des kapazitiven Wegaufnehmers (Platten 7, 8) können optische oder piezoelektrische Detektoren eingesetzt werden, welche eine Justierung überflüssig machen. Anstelle des Oszillographen 10 können digital anzeigende Instrumente für Phase, Frequenz und Amplitude aller vier Komponenten (Lautsprecher 3 und Scheiben 1), eingesetzt werden. Eine Automatisierung des gesamten Vorgangs mit Bestimmung der Resonanzfrequenz, mit Kontrolle der richtigen Schwingungsform und mit on-line-Rechnerauswertung ist ohne weiteres mit dem Stand der Technik möglich.

Zur Demonstration der Empfindlichkeit der erfindungsgemässen Methode sind in der folgenden Tabelle die Resonanzfrequenzen einer Zweischeibenisolierglaseinheit mit verschiedenen Füllgasen für gegenphasige Schwingung $f_R$ und gleichphasige Schwingung $f_R"$ aufgelistet. Die Scheibengrösse beträgt in diesem Beispiel 60 x 60 cm, die Scheibenstärke 4 mm, der Scheibenabstand 12 mm. Ausserdem sind die Stoffwerte $\gamma = c_p/c_v$ und der Temperaturleitwert $\alpha$ angegeben:

| Füllgas | $f_R$ (Hz) | $f_R"$ (Hz) | $\gamma$ | $\alpha$ ($cm^2$/sec) |
|---------|-----------|------------|----------|-----------------------|
| He | 191 | 22 | 1.63 | 0.43 |
| Ar | 181 | 22 | 1.65 | 0.20 |
| Luft | 174 | 23 | 1.40 | 0.18 |
| R12 | 142 | 23 | 1.14 | 0.031 |

Die aufgeführten Resonanzfrequenzen $f_R"$ für phasengleiche Schwingungen zeigen deutlich, dass bei dieser Schwingungsform keine Gasabhängigkeit vorliegt. Die gegenphasige Resonanz liegt bei wesentlich höheren Frequenzen, weil die Rückstellkraft aufgrund der Kompression des Zwischenraumes stark erhöht ist. Nach den elementaren Gesetzen der Schwingungslehre ist die Resonanzfrequenz $f_R$ mit der Richtgrösse D und der Schwingungsmasse m wie folgt verbunden:

$$f_R \sim \sqrt{\frac{D}{m}} \qquad (2)$$

Da D auch proportional zum Wert $\gamma = c_p/c_v$ ist, sind erwartungsgemäss die Werte der Resonanzfrequenzen $f_R$ der Edelgase höher als die von Luft und die Resonanzfrequenz $f_R$ von Freon (dem schweren Gas R12) tiefer als die von Luft.

Die Tabelle zeigt noch zwei wichtige Ergebnisse:

1. Die Resonanzfrequenzen $f_R$ von Helium und Argon sind verschieden, obwohl fast gleiche $\gamma$-Werte vorliegen.

2. Die Unterschiede der Resonanzfrequenzen $f_R$ von Luft und Helium einerseits und von Luft und Freon andererseits sind wesentlich grösser als theoretisch erwartet. Obwohl die exakte Behandlung der Schwingungen einer Isolierglaseinheit recht komplex ist, kann man hier in grober Näherung sagen, dass in Anlehnung an obige Formel 2 die Quadrate der Resonanzfrequenzen $f_R$ sich proportional zu den $\gamma$-Werten verhalten sollten, also

$$f_R^2 \text{ (Gas)} : f_R^2 \text{ (Luft)} = \gamma \text{(Gas)} : \gamma \text{ (Luft)} \qquad (3).$$

Dieses Verhältnis ist zwischen Luft und Argon gut erfüllt, bei den beiden anderen Gasen ist der gemessene Effekt wie erwähnt stark verzerrt in Richtung höherer Selektivität.

Die Erklärung für dieses Verhalten liegt darin, dass im Frequenzbereich von etwa 20 bis 200 Hz, in dem die Resonanzfrequenzen bei üblichen Isolierglastypen auftreten, noch keine ideale adiabatische Kompression eintritt. Das heisst, dass die bei jedem Schwingungszyklus im Gas erzeugte Erwärmung und Abkühlung nicht thermisch isoliert abläuft, sondern dass ein merklicher Anteil der Kompressionswärme vom Gas auf die Umgebung, die Glasscheibe, übergeht und umgekehrt. Wie hoch dieser Anteil ist, wird durch das instationäre Wärmeleitvermögen des Gases, also dem Temperaturleitwert

$$\alpha = \lambda / c_p \cdot \varrho$$

geregelt, welcher ebenfalls zum Vergleich in der Tabelle angegeben ist. Je höher der $\alpha$-Wert ist, desto kleiner ist die Relaxationszeit, also das Zeitintervall, in dem ein Grossteil der Wärme abfliesst.

Da Leichtgase ein relativ hohes $\alpha$ besitzen, geht der Temperaturausgleich sehr schnell vor sich, das heisst, das leichte Gas Helium weicht stärker vom adiabatischen Idealfall ab als Luft und Luft wiederum stärker als das schwere Freon. Da Luft und Argon zufällig gleiches $\alpha$ besitzen, liegen die Resonanzfrequenzen enger zusammen.

Bei höheren Resonanzfrequenzen, also bei Verwendung von Oberschwingungen, geht dieser Nebeneffekt verloren und die Frequenzverhältnisse nähern sich dem durch Formel (3) beschriebenen Zusammenhang. Es ist somit vorteilhaft, bei der Grundschwingung, also der niedrigst möglichen gegenphasigen Resonanzfrequenz zu arbeiten; dort besitzt das erfindungsgemässe Verfahren die höchste Empfindlichkeit und Selektivität und es können Gasmischungen, wie sie bei Schallschutzscheiben verwendet werden, besser identifiziert werden.

In Fig. 2 ist eine zweite Vorrichtung zur Durchführung eines erfindungsgemässen Verfahrens gezeigt, welches nicht auf der Messung der Resonanzfrequenz sondern auf der Messung der Richtgrösse beruht.

An beiden Scheiben 1 einer Isolierglaseinheit sind symmetrisch elektromagnetische Schwingungserreger (Taster 11, Schwingspulen 12, Permanentmagnete 13) und Messelemente (piezoelektrische Selektoren 14) zum Beispiel über Kleber oder Saugelemente befestigt. Die Isolierglaseinheit wird in dieser Anordnung durch direkte Kopplung mit dem Erreger zu erzwungenen Schwingungen ausserhalb der Resonanzfrequenzen angeregt. Es wird die Richtgrösse D bzw. die Energieaufnahme des Systems bestimmt.

Die beiden Scheiben 1 der Isolierglaseinheit sind mit den elektromagnetischen Schwingungserregern (11, 12, 13) fest verbunden und können mit Hilfe eines nicht gezeigten Sinus-Generators und eines Verstärkers ähnlich wie in Fig. 1 gleichphasig oder gegenphasig in Schwingungen versetzt werden. Wird eine Arbeitsfrequenz gewählt, welche klein gegen die Resonanzfrequenz des Systems ist, dann geht die Phasendifferenz zwischen Erreger und Schwinger gegen Null und die Richtgrösse D kann wie im stationären Fall als Proportionalitätsfaktor zwischen der periodisch anregenden Kraft K und der Amplitude A definiert werden:

$$D = K/A$$

Die Amplitude A ist wie bei dem der anhand der Fig. 1 beschriebenen Verfahren mit elektrischen oder optischen Aufnehmern zu verfolgen. Die anregende Kraft lässt sich direkt bestimmen oder durch Verwendung eines piezoelektrischen Detektors 14. Möglich ist auch eine Messung der Leistungsaufnahme (Wechselstrom und Wechselspannung) der beiden Erregerspulen 12 und eine entsprechende Eichung der Spulen 12 in Krafteinheiten.

Die Richtgrösse wird nacheinander bei gleichphasigem und gegenphasigem Schwingungsmodus bestimmt. Im ersten Fall wird sie durch die Rückstellkraft des Systems ohne Gaskompression, also allein durch die Glasscheiben 1 geprägt, im zweiten Fall durch die wesentlich höhere Rückstellkraft des Systems mit Gaskompression. Die Differenz $\Delta D$ der beiden Meßwerte ist somit die Richtgrösse, welche durch die Kompression des Gaspolsters zustande kommt. $\Delta D$ kann grundsätzlich als Maß für den gesuchten Wert $\gamma = c_p/c_v$ des Füllgases verwendet werden, gemäss der Formel:

$$\Delta D = F \cdot \gamma$$

Der Faktor F ist nur noch abhängig von geometrischen Daten wie der Scheibengrösse oder dem Scheibenabstand und von der Meßfrequenz. Der Zusammenhang mit Scheibengrösse und -abstand kann analytisch oder numerisch dargestellt werden. Die Abhängigkeit von der Frequenz kommt durch den oben erwähnten Einfluss der Wärmeableitung zustande und wird durch entsprechende Versuchsreihen experimentell ermittelt.

Die beiden beschriebenen Verfahren besitzen jeweils besondere Merkmale und Vorteile. Das zweite Verfahren erfordert einen etwas höheren apparativen Aufwand. Ausserdem wird die Masse des Systems durch die Ankopplung an den Erreger verändert, womit auch das Schwingungsverhalten des Meßobjekts beeinflusst wird. Dafür bietet das zweite Verfahren interessante Vorteile:

Die Meßfrequenz liegt unter der Grundschwingung. Dadurch ist das Schwingungsverhalten weniger durch überlagerte Schwingungen und Resonanzen oder akustische Fremdeinflüsse gestört.

Es ist besser geeignet für Dreischeiben-Isolierglas und für unsymmetrischen Scheibenaufbau.

Die Rückstellkraft der Scheiben selbst kann durch die gleichphasige Vergleichsmessung eliminiert werden, so dass ein relativ einfacher funktioneller Zusammenhang mit der Kompressibilität und dem $\gamma$-Wert des Gases entsteht.

Unter Einbeziehung noch zu erstellender Erfahrungswerte und Funktionen kann die Absolutbestimmung von $\gamma$ und damit die direkte Identifizierung des Füllgases durchgeführt werden. Relativmessungen wie bei dem zuerst beschriebenen Verfahren sind selbstverständlich ebenfalls möglich.

Die erwähnte Frequenzabhängigkeit von F aufgrund der nicht idealen adiabatischen Volumenänderung kann als weitere Verfeinerung der Methode eingesetzt werden. Da der Frequenzgang von F durch den Temperaturleitwert wesentlich bestimmt wird, können durch Messung bei geringfügig unterschiedlichen

Frequenzen $\gamma$ und $\alpha$ unabhängig voneinander bestimmt werden. Die Konzentration des Füllgases kann damit noch genauer und zuverlässiger angegeben werden.

22. Okt. 1984
Ka/Ht.

DORNIER SYSTEM GMBH — 1 —

7990 Friedrichshafen

Reg. S 496

P a t e n t a n s p r ü c h e

1. Verfahren zur Untersuchung des Füllgases von Isolierglaseinheiten, dadurch gekennzeichnet, dass die beiden begrenzenden Glasscheiben (1) in niederfrequente mechanische Schwingungen versetzt werden und charakteristische Schwingungseigenschaften wie Resonanzfrequenz oder Richtgrösse bestimmt werden.

2. Verfahren nach Anspruch 1, dadurch gekennzeichnet, dass aus der Messung der Resonanzfrequenz $f_R$ gegenphasig schwingender Glasscheiben (1) und dem Vergleich mit Referenzmessungen bekannter Gasfüllungen der Luftanteil im Scheibenzwischenraum (2) bestimmt wird.

3. Verfahren nach Anspruch 1, dadurch gekennzeichnet, dass aus der Messung der Differenz der Richtgrössen D von gegenphasig und gleichphasig schwingenden Glasscheiben (1) die Kompressibilität des Füllgases und daraus der Wert $\gamma = c_p/c_v$ des Füllgases oder des Luftanteils gewonnen wird.

4. Verfahren nach Anspruch 1 oder 3, dadurch gekennzeichnet, dass die Differenz der Richtgrössen D bei etwas unterschiedlichen Anregungsfrequenzen bestimmt wird und aus dem Frequenzgang der Messwerte zusätzlich ein Maß für den Temperaturleitwert $\alpha$ des Füllgases gewonnen wird.

5. Vorrichtung zur Durchführung der Verfahren nach einem der vorhergehenden Ansprüche, gekennzeichnet durch zwei symmetrisch angeordnete Schwingungserreger (3, 11), die die äusseren Scheiben (1) gleichphasig oder gegenphasig anregen können, und durch Messelemente (7, 8, 14) für Frequenz, Amplitude, Phasenlage, Kraft oder Leistung.

6. Vorrichtung nach Anspruch 5, dadurch gekennzeichnet, dass als Schwingungserreger Lautsprecher (3) oder direkt an den Scheiben (1) befestigte mechanische Taster (11) oder piezoelektrische Elemente vorgesehen sind.

7. Vorrichtung nach Anspruch 5 oder 6, dadurch gekennzeichnet, dass als Messelemente kapazitive Wegaufnehmer (7, 8), optische Sensoren, piezoelektrische Detektoren (14) oder Strom- und Spannungsmessgeräte vorgesehen sind.

22. Okt. 1984
Ka/Ht.

Fig.1

0180068

1/2

Fig. 2